# FASCICULE DE BREVET EUROPEEN

(11) **EP 2 488 581 B1**
(45) Date de publication et mention de la délivrance du brevet: **02.07.2014**
(21) Numéro de dépôt: 10766049.0
(22) Date de dépôt: 15.10.2010
(51) Int. Cl.: C08K 9/02, C01G 9/02, C09C 1/02, C09C 1/28, C09C 1/30, C09C 1/40, C09C 1/56

(54) **INITIATEUR DE RETICULATION**
VERNETZUNGSINITIATOR
CROSSLINKING INITIATOR

(30) Priorité: 15.10.2009 BE 200900629
(43) Date de publication de la demande: 22.08.2012
(73) Titulaire: Societe Industrielle Liegeoise des Oxydes SA, 4480 Engis (BE)
(72) Inventeur: GUIDI, Tamizio, B-4100 Seraing (BE); ROUMACHE, Olivier, B-4500 Huy (BE); BRASSEUR, Jean-Louis, Joseph, B-4400 Flemalle (BE)
(74) Mandataire: Coulon, Ludivine
(86) Numéro de dépôt international: PCT/EP2010/065499
(87) Numéro de publication internationale: WO 2011/045408

(56) Documents cités:
- JP-A- 60 264 324
- US-A- 5 846 310
- US-A1- 2007 072 959
- US-A1- 2007 087 196
- US-A1- 2008 193 760

## Description

La présente invention est relative à un initiateur de réticulation, en particulier de vulcanisation, et à son procédé de fabrication.

Dans les formulations de caoutchouc conventionnelles, l'oxyde de zinc est traditionnellement utilisé comme un activateur pour initier le processus de vulcanisation. Toutefois, il s'avère que l'oxyde de zinc ne réagit qu'en surface et donc qu'un pourcentage important de l'oxyde de zinc n'est pas actif.

Diminuer trop fortement la taille des particules n'est pas une solution. En effet, dans ce cas, la bonne dispersion des particules dans la matrice n'est plus assurée.

Dès lors, dans le domaine du caoutchouc, il a été imaginé à maintes reprises de préparer des charges minérales revêtues d'une fine couche d'oxyde de zinc continue. A titre d'exemple, le document WO2007/041060 décrit des particules revêtues d'oxyde de zinc ou de carbonate de zinc utilisables dans diverses applications telles, par exemple, les cosmétiques, le caoutchouc, les matériaux polymères et substances analogues. Comme autre exemple de document décrivant de telles particules, on peut citer la demande de brevet US 2007/0072959.

Il a également été imaginé dans certains cas de mélanger physiquement un oxyde de zinc avec une charge minérale pour faciliter la dispersion de l'oxyde de zinc dans les formulations de caoutchouc. Toutefois, il apparaît que le produit résultant d'un tel mélange est généralement peu efficace.

On connaît aussi un procédé de précipitation de sel de zinc soluble dans l'eau sur des grains de carbonate de calcium, suivi d'une calcination énergivore, où la granulation est mal contrôlée (JP 60264324).

On connaît enfin des procédés complexes de greffage d'oxyde de zinc sur des grains de charge préalablement revêtus d'une couche d'une autre matière (US-A-584631 0 et US 2008/0193760).

L'invention a pour but d'éviter les inconvénients de la technique actuelle et de mettre au point un initiateur de réticulation particulièrement actif et dont la dispersion dans le milieu est particulièrement efficacement assurée.

Elle a aussi pour but la mise au point d'un procédé permettant une fabrication simple et efficace de cet initiateur, qui, avantageusement, réduise simultanément les problèmes de consommation d'énergie et de pollution atmosphérique généralement présentés par les technique antérieures.

A cette fin, suivant l'invention, on a prévu un initiateur de réticulation comprenant une charge minérale et un composé zincifère greffé sur cette charge minérale, dans lequel ledit composé zincifère est choisi dans le groupe constitué de l'oxyde de zinc, de l'hydroxyde de zinc et de leurs mélanges, le composé zincifère étant sous la forme de particules individuelles en bâtonnets de dimension nanométrique et la charge minérale sous la forme de grains présentant une granulométrie supérieure à celle du composé zincifère et dans lequel les particules individuelles du composé zincifère sont greffées de manière uniformément dispersée à la surface desdits grains de la charge minérale.

Ainsi, cette greffe de particules nanométriques sur les grains de charge minérale améliore nettement l'accessibilité du milieu au composé zincifère par rapport à un revêtement continu de ce composé sur ces mêmes particules. Par conséquent, il faut en utiliser moins dans les formulations de caoutchouc. Les pertes lors du procédé de fabrication sont de ce fait largement réduites.

En outre, l'agent selon l'invention est greffé de manière très simple directement à la surface des grains de charge minérale, sans nécessiter un enrobage ou une imprégnation préalable des grains par un précurseur ou une autre matière.

Avantageusement, selon l'invention, ledit composé zincifère est choisi dans le groupe constitué de l'oxyde de zinc, de l'hydroxyde de zinc, et de leurs mélanges, ce qui permet d'éviter lors de leur fabrication toute opération ultérieure de calcination.

Au sens de l'invention, le terme "caoutchouc" utilisé en tant que tel ou dans une expression "l'industrie du caoutchouc" se réfère à tout caoutchouc naturel, synthétique et autres polymères pouvant être réticulés, en particulier vulcanisés par ou à l'aide d'un initiateur, comme par exemple de l'oxyde de zinc.

Dans une forme de réalisation préférentielle, la charge minérale est choisie dans le groupe constitué du carbonate de calcium, du kaolin, de la silice, de l'argile, du talc, du mica et du noir de carbone. Toute autre charge minérale traditionnellement utilisée par l'industrie du caoutchouc peut être envisagée.

Dans l'initiateur de réticulation selon l'invention, la charge minérale est de préférence le carbonate de calcium ou le kaolin, car ces deux composés sont déjà utilisés dans les formulations à base de caoutchouc et que l'utilisation de l'initiateur selon l'invention n'ajoute donc pas de nouveaux éléments dans la formulation.

De préférence, le composé zincifère est sous la forme de particules individuelles en bâtonnets dont les dimensions sont comprises entre un micron et un nanomètre. De cette façon, l'oxyde de zinc par exemple est rendu plus disponible pour son utilisation lors de la vulcanisation du caoutchouc, et il peut être envisagé, suivant l'invention, de réduire le taux d'incorporation de l'oxyde de zinc de façon significative. Une vulcanisation comparable aux mélanges de références est possible malgré une réduction de 40 à 70 % en poids du contenu en oxyde de zinc (c'est-à-dire par exemple une réduction de 5 ou 2,5phr utilisés avec les produits actuels à 1,5phr comme prévu avantageusement avec l'initiateur suivant l'invention (parties par 100 parts de caoutchouc)).

De manière préférentielle, le composé zincifère greffé présente un taux d'incorporation compris entre 1 et 50 % en poids par rapport au poids total de l'initiateur de réticulation, de préférence entre 17 et 30 %, et de manière plus préférentielle entre 20 et 25 %.

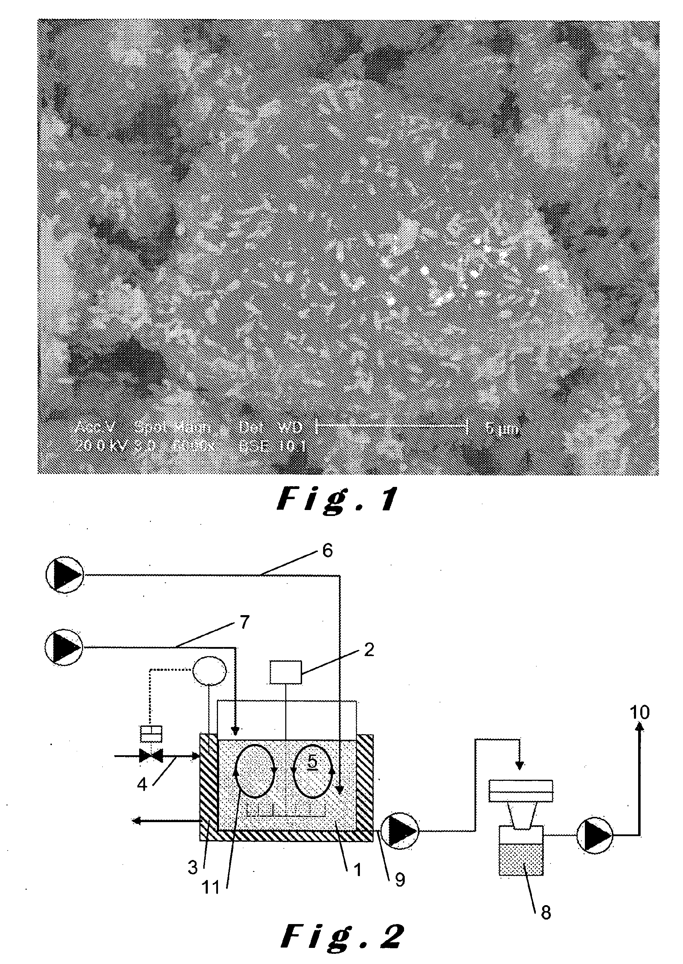

Il ressort clairement de ceci, que le composé zincifère greffé n'assure pas ce que l'on appelle communément un revêtement. En effet, comme on pourra le voir à la figure 1, la charge minérale, sous la forme de grains, constitue le coeur des particules de l'initiateur selon l'invention et les composés zincifères, présents à sa surface sous la forme de bâtonnets, sont greffés dans une structure que l'on pourrait qualifier comme étant « en oursin ». Les grains de la charge minérale ont une granulométrie supérieure à celle du composé zincifère. Les bâtonnets de composé zincifère sont dispersés de façon plus ou moins homogène à la surface des grains de charge minérale mais ne couvrent pas la totalité de ceux-ci ce qui améliore l'accessibilité au composé zincifère.

D'autres formes de réalisation de l'initiateur de réticulation suivant l'invention sont indiquées dans les revendications annexées.

L'invention a aussi pour objet un procédé de fabrication d'un initiateur de réticulation selon l'invention comprenant :
- une dispersion sous agitation d'une charge minérale dans une phase aqueuse à une température prédéterminée, avec formation d'une suspension aqueuse,
- une mise en circulation de cette suspension aqueuse suivant un circuit contrôlé,
- une introduction dans la suspension aqueuse d'une solution aqueuse d'une base à une première extrémité dudit circuit,
- une alimentation, simultanée à ladite introduction, d'une solution aqueuse d'un sel de zinc à ladite suspension aqueuse, à une seconde extrémité du circuit opposée à ladite première extrémité, et
- une précipitation d'un composé zincifère choisi dans le groupe constitué de l'oxyde de zinc, de l'hydroxyde de zinc et de leurs mélanges qui se greffe de manière uniformément dispersée à la surface de ladite charge minérale en suspension, le composé zincifère étant sous la forme de particules individuelles en bâtonnets de dimension nanométrique et la charge minérale sous la forme de grains présentant une granulométrie supérieure à celle du composé zincifère.

Il est apparu d'une manière surprenante que, par ce procédé, on obtenait une amélioration notable de la précipitation du composé zincifère sur les grains de charge minérale et non à côté de celles-ci.

En effet, l'agitation obtenue par la mise en circulation de la suspension aqueuse assure une dispersion parfaite et homogène des grains de charge minérale dans tout le volume réactionnel, le substrat jouant ainsi idéalement son rôle de noyau de germination.

Afin que le composé zincifère précipité à la taille nanométrique se répartisse le plus uniformément possible sur le substrat, il importe que les conditions de précipitation soient parfaitement contrôlées. Il est avantageux que les concentrations tant pour le substrat que pour les deux réactifs ajoutés simultanément soient pratiquement constantes dans tout le volume du réacteur sans qu'apparaisse de sursaturation locale. Cela est obtenu suivant l'invention par une mise en circulation du milieu réactionnel suivant un circuit contrôlé en étudiant notamment les vitesses de rotations du ou des agitateurs utilisés et les flux générés par ceux-ci ainsi que le positionnement relatif des admissions des deux réactifs.

En effet, il est apparu de manière surprenante que les deux substances introduites, la solution de base et la solution de sel de zinc, doivent être introduites dans la suspension de grains de charge minérale en des positions les plus opposées possible. De cette façon les deux solutions sont bien diluées dans la masse du milieu en suspension avant de se rencontrer grâce à la mise en circulation de la suspension aqueuse.

Le procédé suivant l'invention comprend donc avantageusement, dans la suspension aqueuse mise en circulation, une dilution de la solution aqueuse de base introduite et une dilution de la solution aqueuse de sel de zinc alimentée avant une réaction entre la base et le sel de zinc qui va donner lieu à ladite étape de précipitation d'un composé zincifère.

Ce contrôle strict des conditions opératoires, en évitant des sursaturations locales trop élevées, permet de minimiser les pertes de composé zincifère par précipitation extérieurement à la surface des grains de charge minérale.

Comme on peut le constater de ce qui précède, le procédé selon l'invention est aisément mis en oeuvre, puisqu'il ne demande essentiellement qu'un réacteur agité et éventuellement chauffé à basse température, mais surtout, comparé à des procédés de fabrication qui décomposent du carbonate de zinc (comme par exemple le procédé décrit dans le document WO2007/041060), il ne nécessite pas d'étape de calcination ce qui réduit considérablement l'impact environnemental (réduction de la consommation énergétique, dégagement de CO₂).

Pour l'étape de précipitation, la base est avantageusement choisie dans le groupe constitué d'un hydroxyde basique, de préférence du NaOH ou du KOH, et d'un zincate, de préférence du zincate de sodium, et de leurs mélanges.

Le sel de zinc peut être choisi parmi le groupe constitué d'un chlorure, d'un nitrate et d'un sulfate de zinc, de préférence d'un sulfate.

Dans un mode de réalisation avantageux du procédé, le composé zincifère est choisi dans le groupe constitué de l'oxyde de zinc, de l'hydroxyde de zinc, et de leurs mélanges.

De préférence, au sens de l'invention, la charge minérale est choisie dans le groupe constitué du carbonate de calcium, du kaolin, de la silice, de l'argile, du talc, du mica et du noir de carbone ou de toute autre charge minérale ou organique traditionnellement utilisée par l'industrie du caoutchouc qui utilise préférentiellement le carbonate de calcium ou le kaolin.

Dans un mode de réalisation préférentiel, la température prédéterminée se situe entre la température ambiante et 95°C et de préférence entre 40 et 60°C, avantageusement aux environs de 50°C.

Ceci représente en effet la température à laquelle la réaction de neutralisation entre le sulfate de zinc et la base présente un rendement optimal.

Avantageusement le procédé suivant l'invention a lieu à un pHde8à11.

Dans un mode de réalisation préférentiel du procédé selon l'invention, après la précipitation du composé zincifère sur la charge minérale en suspension dans la phase aqueuse, le produit ainsi greffé est récupéré par filtration.

Cette filtration est éventuellement suivie d'un lavage à l'eau et/ou d'un séchage.

Lors de l'addition simultanée du sulfate de zinc et d'une base à la suspension aqueuse de la charge minérale, une augmentation de la vitesse d'agitation peut être requise.

Cette augmentation de la vitesse d'agitation lors de la réaction de neutralisation permet de rendre homogène le milieu réactionnel ce qui favorise la formation de bâtonnets nanométriques du composé zincifère.

Suivant un mode de réalisation préféré de l'invention, la dispersion a lieu dans un réacteur où la mise en circulation est effectuée suivant un circuit entre surface de la suspension et fond du réacteur, ladite étape d'introduction de la base ayant lieu en surface de la suspension et ladite étape d'alimentation de la solution de sel de zinc au fond du réacteur ou, inversement, ladite étape d'introduction de la base ayant lieu au fond du réacteur et ladite étape d'alimentation de la solution de sel de zinc en surface de la suspension.

Suivant un autre mode de réalisation de l'invention, la dispersion a lieu dans un réacteur où la mise en circulation est effectuée suivant un circuit disposé horizontalement ou en oblique entre ses deux extrémités.

D'autres modes de réalisation du procédé suivant l'invention sont indiqués dans les revendications annexées.

L'invention se rapporte également à l'utilisation de l'initiateur suivant l'invention dans un procédé de réticulation de matières telles que du caoutchouc, des cosmétiques, des polymères et des substances analogues. Il est applicable plus particulièrement dans un procédé de vulcanisation.

D'autres caractéristiques, détails et avantages de l'invention ressortiront de la description donnée ci-après, à titre non limitatif et en faisant référence aux exemples et figures annexés.
La figure 1 est un cliché de microscopie électronique d'un échantillon de l'initiateur de réticulation suivant l'invention.
La figure 2 est une illustration schématique du procédé suivant l'invention.
La figure 3 représente les courbes de vulcanisation à 170°C obtenues à partir d'oxyde de zinc libre à raison de 5 parties pour 100 parts (5phr), dans une formulation de caoutchouc.
La figure 4 représente les courbes de vulcanisation à 170°C obtenues à partir d'oxyde de zinc greffé sur du carbonate de calcium à raison de 5 parties pour 100 parts, dans une formulation de caoutchouc.
La figure 5 représente les courbes de vulcanisation à 170°C obtenues à partir d'oxyde de zinc libre à raison de 1,5 partie pour 100 parts, dans une formulation de caoutchouc.
La figure 6 représente les courbes de vulcanisation à 170°C obtenues à partir d'oxyde de zinc greffé sur du carbonate de calcium à raison de 1,5 partie pour 100 parts, dans une formulation de caoutchouc.
La figure 7 est un cliché de microscopie électronique d'un échantillon d'initiateur obtenu dans les conditions de l'exemple 3 de comparaison.

Comme on peut le voir à la figure 1, l'initiateur de réticulation suivant l'invention comprend une charge minérale sur laquelle est greffé un composé zincifère. Dans cette forme de réalisation illustrée, la charge minérale est du carbonate de calcium, également appelé calcite, sur lequel est majoritairement greffé de l'oxyde de zinc. Comme on peut le constater, la plage granulométrique de la calcite s'étend de 0,1 micron à 15 microns. La forme des grains de calcite est grossièrement rhomboédrique avec une très grosse majorité de grains fracturés informes. La plage granulométrique des particules d'oxyde de zinc greffé, beaucoup plus étroite, s'étend de 100 à 500 nanomètres. Les particules individuelles d'oxyde de zinc ont une forme caractéristique en bâtonnets et sont dispersés de façon homogène à la surface des grains de calcite mais ne recouvrent pas la totalité de la surface de ceux-ci.

La mise en évidence des grains de ZnO en contraste sur le fond de CaCO₃ a été effectuée par un examen en électrons rétrodiffusés que l'on appelle également en anglais « back scattering ». Alors que l'examen conventionnel en électrons secondaires permet une bonne observation de la morphologie en accentuant le relief, l'examen en électrons rétrodiffusés permet une différentiation en fonction de la nature chimique des matériaux observés. Les noyaux atomiques lourds sont plus actifs en rétrodiffusion que les noyaux atomiques légers. Dès lors, les composés zincifères apparaissent en blanc sur un fond plus sombre de CaCO₃.

Comme on l'a dit précédemment, le procédé suivant l'invention consiste à neutraliser une solution de sulfate de zinc par une solution basique ou une base en présence d'une charge minérale de manière que la totalité du composé zincifère formé, par exemple de l'oxyde de zinc, se dépose sur celle-ci.

Comme on peut le voir à la figure 2, le procédé de fabrication d'un composé suivant l'invention comprend une première étape de dispersion sous agitation d'une charge minérale dans une phase aqueuse à une température prédéterminée dans un réacteur 1, muni par exemple d'un agitateur à vitesse variable, en particulier d'une turbine 2. De préférence, le réacteur 1 est muni d'une enveloppe chauffante 3 permettant de maintenir la température prédéterminée. La température prédéterminée se situe de préférence aux environs de 50°C et est régulée via un circuit de circulation d'eau de chauffage 4 dans l'enveloppe 3. Le réacteur 1 contient donc une phase aqueuse 5 dans laquelle une charge minérale, de préférence du carbonate de calcium ou du kaolin, est dispersée sous agitation, en formant une suspension aqueuse.

Le procédé illustré sur la figure 2 comprend une addition simultanée à la suspension aqueuse d'une solution de sulfate de zinc et d'une base, par exemple du zincate qui présente une teneur en hydroxyde basique. La solution de sulfate de zinc est alimentée dans le réacteur par un tube plongeur 6 à peu de distance des pales de la turbine. Par ailleurs, le zincate, de préférence le zincate de sodium, est, par une alimentation 7, fourni à la surface de la suspension. L'alimentation des deux réactifs se fait ainsi aux extrémités opposées du circuit de circulation 11 que la turbine fait suivre à la suspension.

Après avoir porté la vitesse d'agitation au niveau désiré, supérieur à celui de l'étape de dispersion, les deux réactifs sont alimentés à la température ambiante. Afin de maintenir de façon homogène le pH à environ 9 dans toute la suspension, le sulfate de zinc est, de préférence, injecté à débit constant au moyen du tube plongeur 6 situé au-dessus de l'agitateur qui assure une circulation centrale descendante tandis que le zincate est alimenté à débit régulé à la surface de la suspension.

Sous ces conditions, la réaction de neutralisation conduit à la précipitation d'un composé zincifère, en particulier d'oxyde et/ou d'hydroxyde de zinc nanométrique, sur la charge minérale et permet d'obtenir l'initiateur de réticulation suivant l'invention. Ce mode de précipitation améliore nettement le rendement du dépôt de composé zincifère sur les grains de substrat. Une fois la précipitation d'oxyde et/ou d'hydroxyde de zinc sur ladite charge minérale réalisée, celle-ci est récupérée, de préférence par filtration.

En laboratoire, la filtration est par exemple réalisée sur un filtre Büchner 8 qui est alimenté par la suspension soutirée à la sortie 9, le filtre Büchner étant raccordé à une source de vide 10.

### Exemple 1

Dans une cuve agitée de 4 l, on a dispersé, au moyen d'une turbine tournant à une vitesse de 600 tours par minute, 400 g de carbonate de calcium micronisé (présentant un d₅₀ de 2 µm) dans 1600 g d'eau déminéralisée.

On a chauffé la suspension à 50°C et cette température a été maintenue tout au long de la réaction.

La vitesse d'agitation est alors portée à 1400 tours par minute et on alimente simultanément une solution de sulfate de zinc épurée titrant 167 g par litre de zinc et une solution de zincate de sodium titrant 40 g par litre de zinc et titrant 300 g par litre de NaOH, toutes deux à la température ambiante. Le débit d'alimentation du sulfate de zinc est de 7,5 ml par minute et celui du zincate de sodium de 5,2 ml par minute. Le sulfate de zinc est injecté à débit constant au-dessus de la turbine tandis que le zincate est alimenté à la surface de la suspension. Les débits mentionnés ci-dessus sont régulés pour maintenir le pH de la suspension à 9. La neutralisation a été effectuée pendant une durée d'une heure et la suspension est ensuite filtrée sur un filtre Buchner de 5 dm². La phase solide ainsi récupérée a été lavée avec de l'eau déminéralisée jusqu'à obtenir une conductivité de 1 mS/cm et le gâteau a été séché à 105°C dans une étuve à air pulsé.

Le gâteau obtenu présentait une épaisseur de 12 mm et une humidité de 40,3 %. Le gâteau séché a ensuite été broyé dans un broyeur à broches. Le produit obtenu a ensuite été analysé et les résultats sont illustrés au tableau 1.

**Tableau 1**

| | |
|---|---|
| Granulométrie d₅₀ (microns) | 2,94 |
| Granulométrie d₉₉ (microns) | 17,8 |
| Prise d'huile (g par 100 g) | 48,9 |
| Perte à 105°C (%) | 0,05 |
| Perte à 400°C (%) | 0,46 |
| Perte à 800°C (%) | 32,4 |
| ZnO (%) | 21,5 |
| Ca (%) | 31,0 |
| CO₂ (%) | 35,5 |
| Mg (ppm) | 1010 |
| Fe (ppm) | 104 |
| Cl (ppm) | < 8 |
| BET (m² par g) | 4,5 |

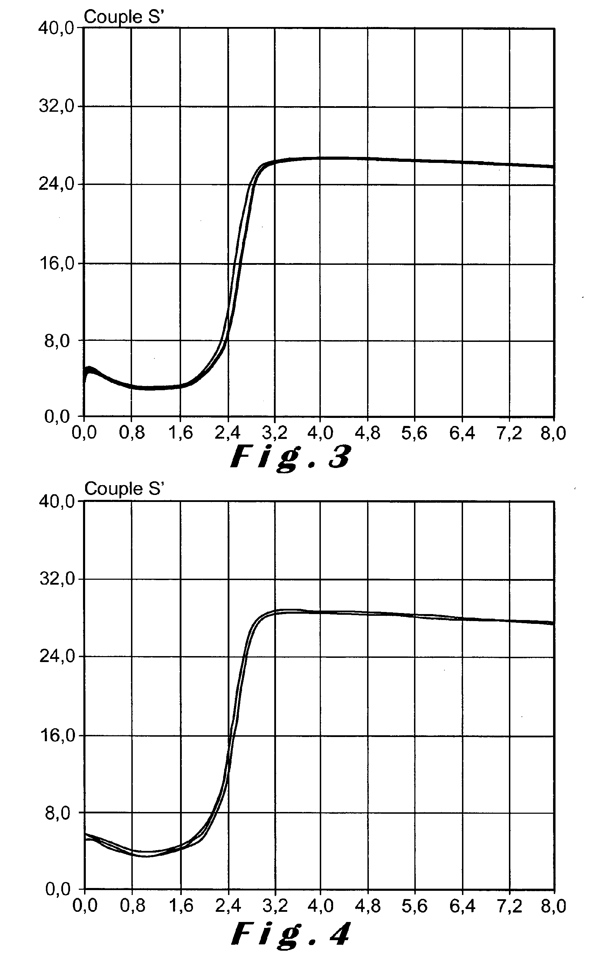

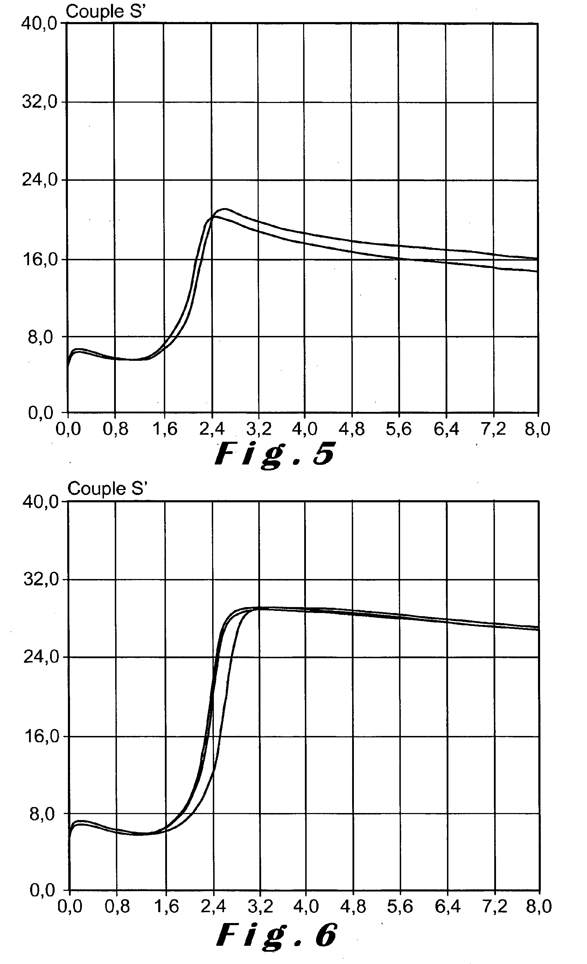

Les figures 3 à 6 ont été obtenues sur un rhéomètre Montech MDR3000 à une température de 170°C. Ces courbes de vulcanisation montrent à toute personne de l'art l'équivalence des deux types d'oxyde pour la vulcanisation et donc la possibilité de réduire le contenu en zinc dans les formulations.

En effet, l'observation des figures 3 à 6 confirme que le produit selon l'invention permet, aux concentrations habituelles, une vulcanisation de qualité égale à celle obtenue avec un oxyde de zinc conventionnel.

En outre le produit selon l'invention permet une vulcanisation à une concentration en zinc très inférieure aux doses habituelles, ce qui confirme que la disponibilité de l'oxyde de zinc a été augmentée et dès lors que le taux d'incorporation peut être réduit de façon significative.

### Exemple 2

L'essai est effectué dans une cuve de 500l à double enveloppe, équipée de 2 types d'agitateur, une turbine décentrée au quart du diamètre et un empâteur avec racleur de paroi.

On disperse, au moyen de l'empâteur tournant à une vitesse de 50 tours par minute, 25 kg de carbonate de calcium micronisé (présentant un d50 de 2 µm) dans 210 l d'eau déminéralisée.

La suspension est chauffée à 50°C en régulant une circulation de vapeur dans la double enveloppe et cette température a été maintenue tout au long de la réaction.

Quand la température est atteinte, on démarre la turbine à 2780 tours par minute, on arrête l'empâteur et on alimente simultanément une solution de sulfate de zinc à 160 g par litre et une solution de NaOH à 251 g par litre, toutes deux à température ambiante.

Le débit d'alimentation du sulfate de zinc est de 0,82 l par minute et celui de la solution de NaOH de 0,62 l en moyenne par minute.

Le sulfate de zinc est injecté à débit constant au moyen d'un plongeur 10 cm au-dessus de la turbine tandis que le NaOH est alimenté à la surface de la suspension. Le débit de NaOH est régulé de façon à maintenir le pH de la suspension à 9. La neutralisation a été effectuée pendant une durée de 152 minutes. La suspension est ensuite filtrée sur un filtre-presse de 1,7 m², le gâteau est ensuite lavé avec de l'eau déminéralisée jusqu'à obtenir une conductivité de 1,8 mS/cm. Le gâteau obtenu présentait une épaisseur de 38 mm et une humidité de 36,28 %.

Le gâteau est ensuite séché dans un sécheur de type Spin-Flash pour obtenir une perte à 105 °C inférieure à 0,1 %

Le produit a ensuite été analysé et les résultats sont illustrés dans le tableau 2 ci-dessous.

**Tableau 2**

| | |
|---|---|
| Granulométrie d₅₀ (microns) | 2,88 |
| Granulométrie d99 (microns) | 17,4 |
| Prise d'huile (g par 100 g) | 45,9 |
| Perte à 105°C (%) | 0,09 |
| Perte à 400°C (%) | 0,68 |
| Perte à 800°C (%) | 22,4 |
| ZnO (%) | 48,8 |
| Ca (%) | 19,0 |
| CO₂ (%) | 22,2 |
| Mg (ppm) | 1010 |
| Fe (ppm) | 101 |
| Cl (ppm) | 34 |
| BET (m² par g) | 4,1 |

### Exemple 3 (exemple de comparison)

Dans une cuve agitée de 4 l, on a dispersé, au moyen d'une turbine tournant à une vitesse de 600 tours par minute, 400 g de carbonate de calcium micronisé (présentant un d₅₀ de 2 µm) dans 1600 g d'eau déminéralisée.

On a chauffé la suspension à 50°C et cette température a été maintenue tout au long de la réaction.

La vitesse d'agitation est alors portée à 1400 tours par minute et on alimente simultanément, à la surface de la suspension, une solution de sulfate de zinc épurée titrant 167 g par litre de zinc et une solution de zincate de sodium titrant 40 g par litre de zinc et titrant 300 g par litre de NaOH, toutes deux à la température ambiante. Le débit d'alimentation du sulfate de zinc est de 7,5 ml par minute et celui du zincate de sodium de 5,2 ml par minute. Les débits mentionnés ci-dessus sont régulés pour maintenir le pH de la suspension à 9. La neutralisation a été effectuée pendant une durée d'une heure et la suspension est ensuite filtrée sur un filtre Buchner de 5 dm². La phase solide ainsi récupérée a été lavée avec de l'eau déminéralisée jusqu'à obtenir une conductivité de 1 mS/cm. Le gâteau obtenu présentait une épaisseur de 11 mm et une humidité de 43,2 %.

Le gâteau a été séché à 105°C dans une étuve à air pulsé et ensuite broyé dans un broyeur à broches.

Le produit obtenu a ensuite été analysé et les résultats sont illustrés au tableau 3 ci-dessous.

**Tableau 3**

| | |
|---|---|
| Granulométrie d₅₀ (microns) | 3,30 |
| Granulométrie d99 (microns) | 19,95 |
| Prise d'huile (g par 100 g) | 39,7 |
| Perte à 105°C (%) | 0,15 |
| Perte à 400°C (%) | 0,53 |
| Perte à 800°C (%) | 20,6 |
| ZnO (%) | 19,7 |
| Ca (%) | 29,9 |
| CO₂ (%) | 35,7 |
| Mg (ppm) | 1120 |
| Fe (ppm) | 134 |
| Cl (ppm) | 13 |
| BET (m² par g) | 2,8 |

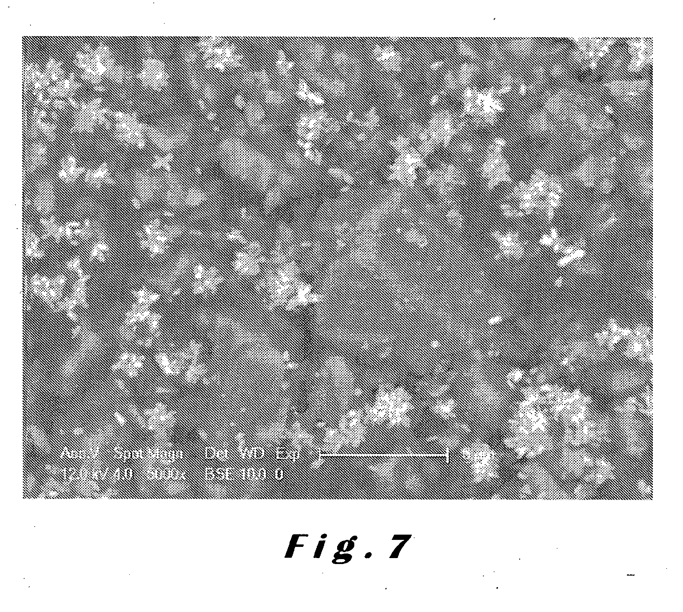

L'analyse SEM illustrée par la photo de la figure 7 montre de manière surprenante combien la microstructure du produit obtenu est différente de celle obtenue suivant l'invention et illustrée par la photo de la figure 1.

On constate que les particules de ZnO sont agglomérées en « petits bouquets de grains de riz », sans interaction apparente avec les grandes particules de substrat. Cela contraste bien avec la situation suivant l'invention où les particules de ZnO sont greffées et dispersées de façon homogène sur la surface des grains de substrat et donc nettement plus disponibles lors de la vulcanisation.

Le résultat de l'essai de l'exemple 3 est considéré négatif.

### Exemple 4

Dans une cuve agitée de 4 l, on a dispersé, au moyen d'une turbine tournant à une vitesse de 600 tours par minute, 400 g de kaolin micronisé (présentant un d₅₀ de 2,5µm) dans 1600 g d'eau déminéralisée.

On a chauffé la suspension à 50°C et cette température a été maintenue tout au long de la réaction.

La vitesse d'agitation est alors portée à 1400 tours par minute et on alimente simultanément une solution de sulfate de zinc épurée titrant 167 g par litre de zinc et une solution de zincate de sodium titrant 40 g par litre de zinc et titrant 300 g par litre de NaOH, toutes deux à la température ambiante. Le débit d'alimentation du sulfate de zinc est de 7,1 ml par minute et celui du zincate de sodium de 5,1 ml par minute. Le sulfate de zinc est alimenté à débit constant à la surface de la suspension tandis que le zincate est injecté au-dessus de la turbine. Les débits mentionnés ci-dessus sont régulés pour maintenir le pH de la suspension à 8. La neutralisation a été effectuée pendant une durée d'une heure et la suspension est ensuite filtrée sur un filtre Buchner de 5 dm². La phase solide ainsi récupérée a été lavée avec de l'eau déminéralisée jusqu'à obtenir une conductivité de 1 mS/cm et le gâteau a été séché à 105°C dans une étuve à air pulsé.

Le gâteau obtenu présentait une épaisseur de 26 mm et une humidité de 67,2 %. Le gâteau séché a ensuite été broyé dans un broyeur à broches. Le produit obtenu a ensuite été analysé et les résultats sont illustrés au tableau.

**Tableau**

| | |
|---|---|
| Granulométrie d₅₀ (microns) | 2,05 |
| Granulométrie d₉₉ (microns) | 19.6 |
| Prise d'huile (g par 100 g) | 69,8 |
| Perte à 105°C (%) | 0,11 |
| Perte à 400°C (%) | 4,48 |
| Perte à 800°C (%) | 12,7 |
| ZnO (%) | 19,7 |
| Al₂O₃ (%) | 20,7 |
| SiO₂ (%) | 42,1 |
| BET (m² par g) | 28,2 |

Il est bien entendu que la présente invention n'est en aucune façon limitée aux formes de réalisation décrites ci-dessus et que bien des modifications peuvent y être apportées sans sortir du cadre des revendications annexées.

## Revendications

1. Initiateur de réticulation comprenant une charge minérale et un composé zincifère greffé sur cette charge minérale, dans lequel ledit composé zincifère est choisi dans le groupe constitué de l'oxyde de zinc, de l'hydroxyde de zinc et de leurs mélanges, le composé zincifère étant sous la forme de particules individuelles en bâtonnets de dimension nanométrique et la charge minérale sous la forme de grains présentant une granulométrie supérieure à celle du composé zincifère et dans lequel les particules individuelles du composé zincifère sont greffées de manière uniformément dispersée à la surface desdits grains de la charge minérale.

2. Initiateur selon la revendication 1, dans lequel la charge minérale est choisie dans le groupe constitué du carbonate de calcium, du kaolin, de la silice, de l'argile, du talc, du mica, du noir de carbone et de leur mélange.

3. Initiateur selon l'une des revendications 1 et 2, **caractérisé en ce que** les particules greffées ne couvrent pas la totalité de la surface des grains de charge minérale.

4. Initiateur selon l'une des revendications 1 à 3, dans lequel le composé zincifère greffé présente un taux d'incorporation compris entre 1 et 50 % en poids par rapport au poids total de l'initiateur, de préférence entre 17 et 30 % et de manière plus préférentielle entre 20 et 25 %.

5. Procédé de fabrication d'un initiateur de réticulation selon l'une quelconque des revendications 1 à 4, comprenant :
- une dispersion d'une charge minérale dans une phase aqueuse à une température prédéterminée, avec formation d'une suspension aqueuse,
- une mise en circulation de cette suspension aqueuse suivant un circuit contrôlé,
- une introduction dans la suspension aqueuse d'une solution aqueuse d'une base à une première extrémité dudit circuit,
- une alimentation, simultanée à ladite introduction, d'une solution aqueuse d'un sel de zinc à ladite suspension aqueuse, à une seconde extrémité du circuit opposée à ladite première extrémité, et
- une précipitation d'un composé zincifère choisi dans le groupe constitué de l'oxyde de zinc, de l'hydroxyde de zinc et de leurs mélanges qui se greffe de manière uniformément dispersée à la surface de ladite charge minérale en suspension, le composé zincifère étant sous la forme de particules individuelles en bâtonnets de dimension nanométrique et la charge minérale sous la forme de grains présentant une granulométrie supérieure à celle du composé zincifère.

6. Procédé selon la revendication 5, dans lequel ladite base est choisie dans le groupe constitué d'un hydroxyde basique, de préférence de NaOH ou KOH, d'un zincate, de préférence de zincate de sodium, et de leurs mélanges.

7. Procédé selon l'une ou l'autre des revendications 5 et 6, dans lequel ledit sel de zinc est choisi parmi le groupe constitué d'un chlorure, d'un nitrate et d'un sulfate de zinc.

8. Procédé selon l'une des revendications 5 à 7, dans lequel ladite température prédéterminée est comprise entre la température ambiante et 95°C et se situe de préférence aux environs de 50°C.

9. Procédé selon l'une quelconque des revendications 5 à 8, comprenant en outre une récupération par filtration de la charge minérale sur laquelle est greffé le composé zincifère et qui est en suspension dans ladite phase aqueuse.

10. Procédé selon la revendication 9, dans lequel la filtration est suivie d'un lavage à l'eau et éventuellement d'un séchage.

11. Procédé selon l'une quelconque des revendications 5 à 10, dans lequel les étapes d'introduction et d'alimentation simultanées sont accompagnées d'une augmentation de vitesse de circulation.

12. Procédé suivant l'une quelconque des revendications 5 à 11, dans lequel la dispersion a lieu dans un réacteur où la mise en circulation est effectuée suivant un circuit entre surface de la suspension et fond du réacteur, ladite étape d'introduction de la base ayant lieu en surface de la suspension et ladite étape d'alimentation de la solution de sel de zinc au fond du réacteur ou, inversement, ladite étape d'introduction de la base ayant lieu au fond du réacteur et ladite étape d'alimentation de la solution de sel de zinc en surface de la suspension.

13. Procédé suivant l'une quelconque des revendications 5 à 11, dans lequel la dispersion a lieu dans un réacteur où la mise en circulation est effectuée suivant un circuit disposé horizontalement ou en oblique entre ses deux extrémités.

## Patentansprüche

1. Vernetzungsinitiator, der einen mineralischen Füllstoff und eine auf diesen mineralischen Füllstoff gepfropfte zinkhaltige Verbindung umfasst, wobei die zinkhaltige Verbindung aus der Gruppe bestehend aus Zinkoxid, Zinkhydroxid und deren Gemischen ausgewählt ist, die zinkhaltige Verbindung in der Form einzelner Partikel als Stäbchen nanometrischer Größe ist und der mineralische Füllstoff in der Form von Körnern ist, die eine Korngröße aufweisen, die größer als die der zinkhaltigen Verbindung ist, und wobei die einzelnen Partikel der zinkhaltigen Verbindung gleichmäßig verteilt auf die Oberfläche der Körner des mineralischen Füllstoffs gepfropft sind.

2. Initiator nach Anspruch 1, wobei der mineralische Füllstoff aus der Gruppe bestehend aus Calciumcarbonat, Kaolin, Siliciumdioxid, Ton, Talkum, Glimmer, Ruß und deren Gemisch ausgewählt ist.

3. Initiator nach einem der Ansprüche 1 und 2, **dadurch gekennzeichnet, dass** die gepfropften Partikel nicht die Gesamtheit der Oberfläche von Körnern von mineralischem Füllstoff bedecken.

4. Initiator nach einem der Ansprüche 1 bis 3, wobei die gepfropfte zinkhaltige Verbindung einen Beimischungsgehalt zwischen 1 und 50 Gew.-% in Bezug auf das Gesamtgewicht des Initiators, vorzugsweise zwischen 17 und 30 % und besonders bevorzugt zwischen 20 und 25 % aufweist.

5. Verfahren zur Herstellung eines Vernetzungsinitiators nach einem beliebigen der Ansprüche 1 bis 4, wobei das Verfahren Folgendes umfasst:
- Dispergieren eines mineralischen Füllstoffs in einer wässrigen Phase bei einer vorherbestimmten Temperatur unter Bildung einer wässrigen Suspension,
- Zirkulieren dieser wässrigen Suspension entlang einem kontrollierten Kreislauf,
- Einbringen einer wässrigen Lösung einer Base in die wässrige Suspension an einem ersten Ende des Kreislaufs,
- zeitgleich mit dem Einbringen Zuführen einer wässrigen Lösung eines Zinksalzes zu der wässrigen Suspension an einem zweiten Ende des Kreislaufs, das zu dem ersten Ende entgegengesetzt ist, und
- Fällen einer zinkhaltigen Verbindung, die aus der Gruppe bestehend aus Zinkoxid, Zinkhydroxid und deren Gemischen ausgewählt ist und die sich gleichmäßig verteilt auf die Oberfläche des suspendierten mineralischen Füllstoffs pfropft, wobei die zinkhaltige Verbindung in der Form einzelner Partikel als Stäbchen nanometrischer Größe ist und der mineralische Füllstoff in der Form von Körnern ist, die eine Korngröße aufweisen, die größer als die der zinkhaltigen Verbindung ist.

6. Verfahren nach Anspruch 5, wobei die Base aus der Gruppe bestehend aus einem basischen Hydroxid, vorzugsweise NaOH oder KOH, einem Zinkat, vorzugsweise Natriumzinkat, und deren Gemischen ausgewählt ist.

7. Verfahren nach dem einen oder dem anderen der Ansprüche 5 und 6, wobei das Zinksalz aus der Gruppe bestehend aus einem Zinkchlorid, einem Zinknitrat und einem Zinksulfat ausgewählt ist.

8. Verfahren nach einem der Ansprüche 5 bis 7, wobei die vorherbestimmte Temperatur zwischen Umgebungstemperatur und 95 °C liegt und vorzugsweise etwa 50 °C beträgt.

9. Verfahren nach einem beliebigen der Ansprüche 5 bis 8, das außerdem ein Rückgewinnen des mineralischen Füllstoffs, auf den die zinkhaltige Verbindung gepfropft ist und der in der wässrigen Phase suspendiert ist, durch Filtration umfasst.

10. Verfahren nach Anspruch 9, wobei auf die Filtration ein Waschen mit Wasser und gegebenenfalls ein Trocknen folgen.

11. Verfahren nach einem beliebigen der Ansprüche 5 bis 10, wobei die zeitgleichen Schritte des Einbringens und des Zuführens von einer Erhöhung der Zirkulationsgeschwindigkeit begleitet werden.

12. Verfahren nach einem beliebigen der Ansprüche 5 bis 11, wobei das Dispergieren in einem Reaktor erfolgt, in dem die Zirkulation entlang einem Kreislauf zwischen der Oberfläche der Suspension und dem Boden des Reaktors durchgeführt wird, der Schritt des Einbringens der Base an der Oberfläche der Suspension und der Schritt des Zuführens der Zinksalzlösung am Boden des Reaktors stattfindet oder umgekehrt der Schritt des Einbringens der Base am Boden des Reaktors und der Schritt des Zuführens der Zinksalzlösung an der Oberfläche der Suspension stattfindet.

13. Verfahren nach einem beliebigen der Ansprüche 5 bis 11, wobei das Dispergieren in einem Reaktor erfolgt, in dem die Zirkulation entlang einem Kreislauf durchgeführt wird, der horizontal oder schräg zwischen seinen zwei Enden angeordnet ist.

## Claims

1. A crosslinking initiator comprising a mineral filler and a zinciferous compound grafted onto this mineral filler, wherein the said zinciferous compound is chosen from the group formed by zinc oxide, zinc hydroxide and the mixtures thereof, the zinciferous compound being in the form of individual rod particles of nanometric size and the mineral filler in the form of grains having a larger particle size than the zinciferous compound, and wherein the individual particles of the zinciferous compound are grafted in uniformly dispersed manner on the surface of the said grains of mineral filler.

2. The initiator according to claim 1 wherein the mineral filler is chosen from the group formed by calcium carbonate, kaolin, silica, clay, talc, mica, carbon black and mixtures thereof.

3. The initiator according to one of claims 1 and 2, **characterized in that** the grafted particles do not entirely cover the surface of the mineral filler grains.

4. The initiator according to one of claims 1 to 3 wherein the grafted zinciferous compound has an incorporation rate of between 1 and 50 % by weight relative to the total weight of the initiator, preferably between 17 and 30 % and more preferably between 20 and 25 %.

5. A process for manufacturing a crosslinking initiator according to any of claims 1 to 4, comprising:
- the dispersion of a mineral filler in an aqueous phase at predetermined temperature, with the formation of an aqueous suspension;
- the circulation of this aqueous suspension along a controlled circuit;
- the addition to the aqueous suspension of an aqueous base solution at a first end of the said circuit;
- the feeding, simultaneously with said addition, of an aqueous solution of a zinc salt to said aqueous suspension at a second end of the circuit opposite the said first end; and
- precipitation of a zinciferous compound chosen from the group formed by zinc oxide, zinc hydroxide and the mixtures thereof, which is grafted in uniformly dispersed manner on the surface of the said mineral filler in suspension, the zinciferous compound being in the form of individual rod particles of nanometric size and the mineral filler in the form of grains having a larger particle size than the zinciferous compound.

6. The process according to claim 5 wherein the said base is chosen from the group formed by a basic hydroxide, preferably NaOH or KOH, a zincate, preferably sodium zincate, and the mixtures thereof.

7. The process according to one or other of claims 5 and 6 wherein the said zinc salt is chosen from the group formed by a chloride, a nitrate and a zinc sulfate.

8. The process according to one of claims 5 to 7 wherein the said predetermined temperature is between ambient temperature and 95°C, and preferably liens in the region of 50°C.

9. The process according to any of claims 5 to 8 further comprising the recovery by filtration of the mineral filler on which the zinciferous compound is grafted and which is in suspension in the said aqueous phase.

10. The process according to claim 9 wherein the filtration is followed by washing in water and optionally drying.

11. The process according to any of claims 5 to 10 wherein the addition and simultaneous feeding steps are accompanied by an increase in the circulation rate.

12. The process according to any of claims 5 to 11 wherein dispersion takes places in a reactor in which circulation is conducted following a circuit between the surface of the suspension and the bottom of the reactor, the said base addition step taking place on the surface of the suspension and the said feeding step of the zinc salt solution taking place at the bottom of the reactor, or the reverse, the said base addition step taking place at the bottom of the reactor and the said feeding step of the zinc salt solution on the surface of the suspension.

13. The process according to any of claims 5 to 11 wherein dispersion takes place in a reactor in which circulation is conducted along a circuit arranged horizontally or obliquely between its two ends.
